# EUROPEAN PATENT APPLICATION

(11) **EP 4 461 776 A1**
(43) Date of publication of application: **13.11.2024**
(21) Application number: 24174471.3
(22) Date of filing: 07.05.2024
(51) Int. Cl.: C09D 129/04, C09D 175/04, H01M 10/658

(54) **AEROGEL COMPOSITION FOR BATTERY INSULATION SHEET, MANUFACTURING METHOD THEREOF, BATTERY INSULATION SHEET FORMED USING THE SAME, AND BATTERY MODULE COMPRISING THE SAME**

(30) Priority: 08.05.2023 KR 20230059101
(71) Applicant: Samsung SDI Co., Ltd., Yongin-si, Gyeonggi-do 17084 (KR)
(72) Inventor: PARK, Hye Jin, 17084 Yongin-si, Gyeonggi-do (KR); WOO, Myung Heui, 17084 Yongin-si, Gyeonggi-do (KR); RYU, Bo Kyung, 17084 Yongin-si, Gyeonggi-do (KR); YANG, Seung Yong, 17084 Yongin-si, Gyeonggi-do (KR); RA, Ha Na, 17084 Yongin-si, Gyeonggi-do (KR); LEE, Jae Hyun, 17084 Yongin-si, Gyeonggi-do (KR)
(74) Representative: Gulde & Partner

(57) **Abstract**

Example embodiments include an aerogel composition for battery insulation sheets, the aerogel composition including an aerogel, a functional material including a binder, a dispersant, or a combination thereof, and a solvent. The binder includes a first binder including an aqueous polymer binder and a second binder including a fluorocarbon-based binder. Example embodiments also include a method of manufacturing the aerogel composition, a battery insulation sheet formed using the aerogel composition, and a battery module including the aerogel composition.

## Description

### BACKGROUND

### 1. Field

Example embodiments relate to an aerogel composition for battery insulation sheets, a method of manufacturing the same, a battery insulation sheet formed using the same, and a battery module including the same.

### 2. Description of the Related Art

A secondary battery is a power storage system that converts electrical energy into chemical energy, stores the chemical energy, and provides high energy density. Compared to a primary battery, which is not rechargeable, a secondary battery is typically rechargeable and is widely used in information technology (IT) devices such as, e.g., smartphones, cellular phones, laptop computers, tablet computers, and the like. There is currently an increased interest in electric vehicles to reduce or prevent environmental pollution, and high-capacity secondary batteries are often adopted in electric vehicles. Secondary batteries typically exhibit desirable characteristics such as, e.g., high density, high output, and stability.

When a plurality of high-capacity cells is included, as in a lithium ion secondary battery, one cell may overheat and may go into thermal runaway for various reasons, which may adversely affect other cells adjacent thereto, and therefore it is desirable to thermally isolate neighboring cells from each other.

Conventionally, a plate or an insulating resin sheet is located between cells to isolate and insulate neighboring cells from each other.

### SUMMARY

The invention is defined by the appended claims. The description that follows is subjected to this limitation. Any disclosure lying outside the scope of said claims is only intended for illustrative as well as comparative purposes. Example embodiments provide an aerogel composition for battery insulation sheets having desired, advantageous or improved thermal insulation and heat resistance, a method of manufacturing the same, a battery insulation sheet formed using the same, and a battery module including the same.

According to one aspect of the present invention there is provided an aerogel composition for battery insulation sheets, the aerogel composition including an aerogel, a functional material including a binder, a dispersant, or a combination thereof, and a solvent, wherein the binder includes a first binder including an aqueous polymer binder and a second binder including a fluorocarbon-based binder.

The aerogel may have a Brunauer, Emmett and Teller (BET) specific surface area in a range of 500 m²/g to 1,000 m²/g.

The aerogel may be included so as to account for a range of 30 wt% to 70 wt% based on the total amount of solids in the aerogel composition.

The first binder may include at least one of a water-based polymer, an anionic water-soluble polymer, a cationic water-soluble polymer, and a water-dispersible polymer.

The second binder may include at least one of polytetrafluoroethylene, polyvinylidene fluoride, and a polyvinylidene fluoride-hexapropylene copolymer.

The first binder and the second binder may be included in a weight ratio of 0.1:1 to 20:1.

The dispersant may include at least one of a surfactant and a phosphate-based salt.

The functional material may be included so as to account for a range of 30 wt% to 70 wt% based on the total amount of solids in the aerogel composition.

The solvent may include at least one of a polar solvent and a non-polar solvent.

The weight ratio of the solvent to the total amount of solids in the aerogel composition may be in a range of 1:1 to 1:90.

The aerogel composition may further include a flame retardant including a phosphorus-based material.

The phosphorus-based material may include at least one of a phosphate-based ammonium salt, red phosphorus, and compounds represented by Chemical Formula 1 and Chemical Formula 2 below. 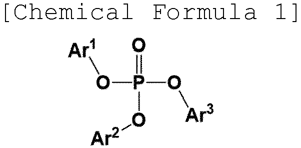 in Chemical Formula 1 above, Ar¹ to Ar³ are each independently substituted or unsubstituted C6 to C20 aryl groups, and 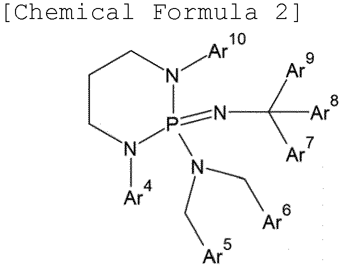 in Chemical Formula 2 above, Ar⁴ to Ar¹⁰ are each independently substituted or unsubstituted C6 to C20 aryl groups.

The flame retardant may be included so as to account for 0.1 to 20 parts by weight based on 100 parts by weight of the functional material.

The aerogel may be included so as to account for a range of 40 wt% to 60 wt%, the first binder may be included so as to account for a range of 10 wt% to 50 wt%, and the second binder may be included so as to account for a range of 1 wt% to 45 wt%, based on the total amount of solids in the aerogel composition.

The aerogel may be included so as to account for a range of 40 wt% to 60 wt%, the first binder may be included so as to account for a range of 10 wt% to 50 wt%, the second binder may be included so as to account for a range of 1 wt% to 45 wt%, and the dispersant may be included so as to account for a range of 0.1 wt% to 5 wt%, based on the total amount of solids in the aerogel composition.

The aerogel may be included so as to account for a range of 40 wt% to 60 wt%, the first binder may be included so as to account for a range of 10 wt% to 50 wt%, the second binder may be included so as to account for a range of 1 wt% to 45 wt%, the dispersant may be included so as to account for a range of 0.1 wt% to 5 wt%, and the flame retardant may be included so as to account for a range of 0.1 wt% to 8 wt%, based on the total amount of solids in the aerogel composition.

According to another aspect of the present invention there is provided a method of manufacturing an aerogel composition for battery insulation sheets, the method including mixing a solvent with a functional material including a binder, a dispersant, or a combination thereof to manufacture a solvent mixture, and mixing the solvent mixture with an aerogel to manufacture an aerogel composition, wherein the binder includes a first binder including an aqueous polymer binder and a second binder including a fluorocarbon-based binder.

According to another aspect of the present invention there is provided a battery insulation sheet including a first substrate, a second substrate, and an aerogel layer formed between the first substrate and the second substrate, wherein the aerogel layer is formed using the aerogel composition.

According to another aspect of the present invention there is provided a battery module including a plurality of cells and the battery insulation sheet located between the plurality of cells, wherein the first substrate and the second substrate face cells adjacent thereto, respectively.

### BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a schematic view showing the structure of a battery insulation sheet according to an example embodiment; and
FIG. 2 is a schematic view showing the battery insulation sheet according to the example embodiment of FIG. 1 formed between a plurality of cells.

### DETAILED DESCRIPTION OF EXEMPLARY EMBODIMENTS

Hereinafter, example embodiments will be described in detail such that a person having ordinary skill in the art can easily implement the example embodiments. However, example embodiments may be implemented in many different forms and are not limited to the example embodiments described herein.

An insulating material, which is a material that hinders or prevents heat from flowing from higher to lower temperatures, is used not only in refrigerators, cold storages, and buildings, but also in a variety of other industries, including the aircraft, electronics, and automotive industries.

The insulating material desirably and advantageously has substantial thermal insulation performance through low thermal conductivity and mechanical strength to maintain thermal insulation performance over time.

Aerogel, which is a transparent or translucent advanced material having a nanoporous structure, exhibits a substantially low density and low thermal conductivity, and therefore aerogel may be desired as an insulating material and is considered to be a highly efficient super insulating material that can be used in a variety of industrial applications.

A substantial advantage of the aerogel is that the aerogel has lower thermal conductivity than conventional organic insulating materials such as, e.g., Styrofoam, and that the aerogel is capable of solving or overcoming critical weaknesses of organic insulating materials, such as, e.g., fire vulnerability and generation of harmful gases in the event of fire.

An aerogel composition for battery insulation sheets includes an aerogel, a functional material including a binder, a dispersant, or a combination thereof, and a solvent, wherein the binder includes a first binder including an aqueous polymer binder and a second binder including a fluorocarbon-based binder.

A battery insulation sheet manufactured using an aerogel composition including the above components may have desired, advantageous or improved thermal insulation and heat resistance, and may reduce, hinder or inhibit propagation of heat and flames taking place in a cell to cells adjacent thereto due to thermal runaway of the cell.

In an example embodiment, the aerogel may have a BET specific surface area in a range of 500 m²/g to 1,000 m²/g. For example, the aerogel may have a BET specific surface area in a range of 500 m²/g to 950 m²/g, 550 m²/g to 950 m²/g, or 600 m²/g to 900 m²/g. Because the aerogel having the BET specific surface area value within any of the above ranges is included, it is possible to provide a battery insulation sheet capable of effectively reducing, hindering or preventing heat transfer and heat propagation between a plurality of cells. The BET specific surface area may be determined using ISO 9277:2010.

The average particle size D50 of the aerogel may be in a range of 5 um to 200 um, 10 um to 100 um, or 20 um to 50 um. Because the aerogel having the particle size within any of the above ranges is included, thermal insulation may be improved, whereby heat transfer between the plurality of cells may be delayed.

The average particle size D50 may be measured, for example, using a laser diffraction method or scanning electron microscopy (SEM), wherein the average particle size D50 of particles may be defined as the particle size at 50% of the particle size distribution (the particle size corresponding to cumulative 50% of the volume of the particle size distribution).

The content of the aerogel may be in a range of 30 wt% to 70 wt%, 40 wt% to 60 wt%, or 45 wt% to 55 wt%, based on the total amount of solids in the aerogel composition. When a battery insulation sheet is manufactured using the aerogel composition including the aerogel within the above range, thermal insulation of the battery insulation sheet may be improved.

In an example embodiment, the binder may include a first binder including an aqueous polymer binder and a second binder including a fluorocarbon-based binder.

The aqueous polymer binder may include, for example, at least one of a water-based polymer, an anionic water-soluble polymer, a cationic water-soluble polymer, and a water-dispersible polymer.

The water-based polymer may include at least one of, for example, without being limited to, polyvinyl alcohol, polyethylene oxide, polyacrylamide, and polyvinylpyrrolidone.

The anionic water-soluble polymer may include at least one of carboxylic acid, sulfonic acid, sulfuric acid ester, phosphoric acid ester, and a polymer having functional groups of salts thereof. For example, the anionic water-soluble polymer may be a polymer having a carboxylic acid group, and may include, without being limited to, polymaleic acid as an example.

The cationic water-soluble polymer may include at least one of amine, ammonium, phosphonium, sulfonium, and a polymer having functional groups of salts thereof. For example, the cationic water-soluble polymer may be a polymer having an amine group, and may include at least one of, without being limited to, polyethylene amine and polyamine as an example.

The water-dispersible polymer may include, without being limited to, at least one of water-dispersible polyurethane and water-dispersible polyester.

The content of the first binder may be in a range of 10 wt% to 50 wt%, 20 wt% to 48 wt%, or 25 wt% to 45.5 wt%, based on the total amount of solids in the aerogel composition. When a battery insulation sheet is manufactured using the aerogel composition including the first binder within the above range, thermal insulation, durability, and dustiness of the battery insulation sheet may be improved.

The fluorocarbon-based binder may include a heat-resistant binder, and may include at least one of, for example, polytetrafluoroethylene (PTFE), polyvinylidene fluoride (PVDF), and a polyvinylidene fluoride-hexapropylene (PVDF-HFP) copolymer.

The content of the second binder may be in a range of 1 wt% to 45 wt%, 3 wt% to 35 wt%, or 4.5 wt% to 25 wt%, based on the total amount of solids in the aerogel composition. When a battery insulation sheet is manufactured using the aerogel composition including the second binder within the above range, thermal insulation, durability, and dustiness of the battery insulation sheet may be improved.

The first binder and the second binder may be included in a weight ratio in a range of 0.1:1 to 20:1, 1:1 to 15:1, or 1:1 to 10:1. Mixing the first binder and the second binder within any of the above ranges may improve thermal insulation and heat resistance.

In an example embodiment, the dispersant may include at least one of a surfactant and a phosphate-based salt. For example, the dispersant may include at least one of, without being limited to, a non-ionic surfactant, an anionic surfactant, an amphoteric surfactant, a natural surfactant such as lecithin, and phosphate.

Further inclusion of the dispersant may further improve the dispersion of the aerogel in the composition, resulting in even dispersion of the aerogel and improved thermal insulation.

The content of the dispersant may be in a range of 0.1 wt% to 6 wt%, 0.1 wt% to 5 wt%, or 0.1 wt% to 3 wt%, based on the total amount of solids in the aerogel composition. When the dispersant is included within the above range, it is possible to manufacture the aerogel composition at low cost and to manufacture a battery insulation sheet having desired, advantageous or improved thermal insulation, durability, and dustiness using the same.

In an example embodiment, the binder and the dispersant may be included in a weight ratio of in a range of 1:0.001 to 1:0.67, 1:0.001 to 1:0.5, or 1:0.001 to 1:0.3. Mixing the binder and the dispersant in a weight ratio within any of the above ranges may result in more uniform dispersion of the aerogel in an aerogel layer.

The functional material may be included so as to account for a range of 30 wt% to 70 wt%, 40 wt% to 60 wt%, or 45 wt% to 55 wt%, based on the total amount of solids in the aerogel composition.

In an example embodiment, the solvent may include at least one of a polar solvent and a non-polar solvent.

The polar solvent may include water, an alcohol-based solvent, or a combination thereof.

Water may include, for example, purified water, deionized water, or a combination thereof.

The alcohol-based solvent may include at least one of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may include at least one of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, however, water may not be mixed well with aerogel, which is hydrophobic. In an example embodiment, the aerogel may be dispersed evenly by controlling the design of a mixing process, the mixing conditions, the addition of the binder and the dispersant, and the amount of the binder and the dispersant. This even dispersion of the aerogel in the composition may enable the formation of a battery insulation sheet having desired or improved thermal insulation, durability, and dustiness at a low thickness without the use of a large amount of binder.

The solvent may be included such that the weight ratio of the solvent to the total amount of solids in the aerogel composition is in a range of 1:1 to 1:90. For example, the weight ratio of the solvent to the total amount of solids in the aerogel composition may be in a range of 1:50 to 1:70, 1:20 to 1:30, or 1:2 to 1:10. By controlling the weight ratio of the solvent to the total amount of solids in the aerogel composition within the above range, the viscosity may be controlled to coat the aerogel layer.

In an example embodiment, the phosphorus-based material may include any material that is flame retardant and contains phosphorus.

The phosphorus-based material may include, for example, at least one of a phosphate-based ammonium salt, red phosphorus, and compounds represented by Chemical Formula 1 and Chemical Formula 2 below.

The phosphorus-based ammonium salt may include at least one of ammonium dihydrogen phosphate, diammonium hydrogen phosphate, ammonium polyphosphate, and monoammonium phosphate. For example, the phosphorus-based material may include ammonium dihydrogen phosphate. The inclusion of the phosphate-based ammonium salt may reduce, hinder or block propagation of heat of a cell to other cells by forming char due to phosphorylation upon an increase in ambient temperature due to thermal runaway in the cell.

Any commercially available red phosphorus may be used as a flame retardant. For example, red phosphorus is an allotrope of elemental phosphorus P and may be obtained as a reddish-purple amorphous powder.

Red phosphorus may be microencapsulated in a polymer, such as a phenol-formaldehyde resin. When red phosphorus is stored together with one of the catalytic components, microencapsulation may hinder or prevent direct contact between red phosphorus and the external component, thereby prolonging the storage time. Microencapsulated red phosphorus may be hindered or prevented from being hydrolyzed to an unstable volatile compound such as phosphine.

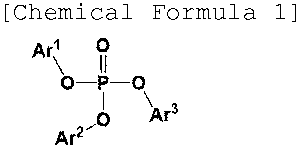

In Chemical Formula 1 above, Ar¹ to Ar³ are each independently substituted or unsubstituted C6 to C20 aryl groups. For example, Ar¹ to Ar³ are each independently substituted or unsubstituted C6 to C18 aryl groups or C6 to C12 aryl groups.

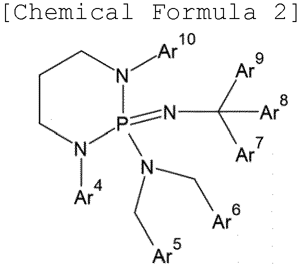

In Chemical Formula 2 above, Ar⁴ to Ar¹⁰ are each independently substituted or unsubstituted C6 to C20 aryl groups. For example, Ar⁴ to Ar¹⁰ are each independently substituted or unsubstituted C6 to C18 aryl groups or C6 to C12 aryl groups.

The phosphorus-based materials represented by Chemical Formula 1 and Chemical Formula 2 above may form polyphosphoric acid when the ambient temperature increases, polyphosphoric acid undergoes esterification and dehydrogenation reaction to form a carbon layer, and the carbon layer thus generated may exhibit a flame retardant effect by reducing, hindering or blocking oxygen and latent heat.

In the disclosure, "aryl group" is defined as a monovalent substituent derived from aromatic hydrocarbon.

Examples of the aryl group may include any one of a phenyl group, a naphthyl group, an anthracenyl group, a phenanthryl group, a naphthacenyl group, a tolyl group, a biphenyl group, a terphenyl group, a fluoranthenyl group, a fluorenyl group, a perylenyl group, an indenyl group, an azulenyl group, a heptalenyl group, a phenalenyl group, and a phenanthrenyl group.

In Chemical Formula 1 and Chemical Formula 2 above, Ar¹ to Ar¹⁰ may each be substituted or unsubstituted with an alkyl group having a carbon number of 1 to 8, an alkoxy group having a carbon number of 1 to 8, a halogen group, a cyano group, or a trimethylsilyl group.

In the disclosure, the term "C#", where "#" is a positive integer, refers to any hydrocarbon having # carbon atoms. Thus, the term "C6" refers to a hydrocarbon compound having 6 carbon atoms, and the term "C20" refers to a hydrocarbon compound having 20 carbon atoms.

The flame retardant may be included so as to account for a range of 0.01 wt% to 20 wt%, 0.1 wt% to 10 wt%, or 0.25 wt% to 5 wt%, based on the total amount of solids in the aerogel composition. The inclusion of the phosphorus-based material within any of the above ranges may improve heat resistance of the insulation sheet as well as thermal insulation of the insulation sheet, thereby reducing, hindering or preventing heat propagation between cells.

The flame retardant may be included so as to account for a range of 0.1 to 20 parts by weight, 0.5 to 17 parts by weight, or 1 to 10 parts by weight, based on 100 parts by weight of the functional material. Controlling the content of the phosphorus-based material relative to the content of the functional material within the above ranges may allow the insulation sheet to form char when exposed to a high-temperature environment, which may act as a flame shield, thereby improving the heat resistance of the insulation sheet and reducing, hindering or preventing propagation of heat and flames of a cell to cells adjacent thereto due to thermal runaway of the cell.

In an example embodiment, based on the total amount of solids in the aerogel composition, the aerogel may be included so as to account for a range of 40 wt% to 60 wt%, the first binder may be included so as to account for a range of 20 wt% to 48 wt%, and the second binder may be included so as to account for a range of 3 wt% to 35 wt%.

As an example, based on the total amount of solids in the aerogel composition, the aerogel may be included so as to account for a range of 45 wt% to 55 wt%, the first binder may be included so as to account for a range of 25 wt% to 45.5 wt%, and the second binder may be included so as to account for a range of 4.5 wt% to 25 wt%. Configuration of the aerogel composition within any of the above ranges may result in desired or advantageous thermal insulation and improved heat resistance, which may reduce, hinder or block heat propagation between cells.

In an example embodiment, based on the total amount of solids in the aerogel composition, the aerogel may be included so as to account for a range of 40 wt% to 60 wt%, the first binder may be included so as to account for a range of 10 wt% to 50 wt%, the second binder may be included so as to account for a range of 1 wt% to 45 wt%, and the dispersant may be included so as to account for a range of 0.1 wt% to 5 wt%.

As an example, based on the total amount of solids in the aerogel composition, the aerogel may be included so as to account for a range of 45 wt% to 55 wt%, the first binder may be included so as to account for a range of 25 wt% to 45.5 wt%, the second binder may be included so as to account for a range of 4.5 wt% to 25 wt%, and the dispersant may be included so as to account for a range of 0.1 wt% to 5 wt%. Configuration of the aerogel composition within any of the above ranges may improve the dispersibility of the aerogel, may achieve desired or improved thermal insulation, and may improve heat resistance, thereby more effectively reducing, hindering or blocking heat propagation between cells.

In an example embodiment, based on the total amount of solids in the aerogel composition, the aerogel may be included so as to account for a range of 40 wt% to 60 wt%, the first binder may be included so as to account for a range of 10 wt% to 50 wt%, the second binder may be included so as to account for a range of 1 wt% to 45 wt%, the dispersant may be included so as to account for a range of 0.1 wt% to 5 wt%, and the flame retardant may be included so as to account for a range of 0.1 wt% to 8 wt%.

As an example, based on the total amount of solids in the aerogel composition, the aerogel may be included so as to account for a range of 45 wt% to 55 wt%, the first binder may be included so as to account for a range of 25 wt% to 45.5 wt%, the second binder may be included so as to account for a range of 4.5 wt% to 25 wt%, and dispersant may be included so as to account for a range of 0.1 wt% to 5 wt%, and the flame retardant may be included so as to account for a range of 0.1 wt% to 8 wt%. Configuration of the aerogel composition within any of the above ranges may improve the dispersibility of the aerogel, may achieve desired or improved thermal insulation, and may improve heat resistance and fire resistance, thereby more effectively reducing, hindering or blocking heat propagation between cells.

In an example embodiment, the aerogel composition may further include a silane-based compound. The silane-based compound may include at least one of, for example, 3-(trimethoxysilyl)propylmethacrylate, methyltriethoxysilane, methyltrimethoxysilane, ethyltrimethoxysilane, octadecyltrimethoxysilane, ethyltriethoxysilane, and 3-glycidoxypropyltrimethoxysilane. Further inclusion of the silane-based compound may further improve dispersibility.

In an example embodiment, an additive, such as a wetting agent, an emulsifier, a compatibilizer, a viscosity modifier, a pH modifier, a stabilizer, an antioxidant, an acid or base trapping agent, a metal inactivator, a defoamer, an antistatic agent, a thickener, an adhesion improver, a coupling agent, a flame retardant, an impact modifier, pigment, dye, a colorant, or a deodorant, may be optionally further included.

A method of manufacturing an aerogel composition includes mixing a solvent with a functional material including a binder, a dispersant, or a combination thereof to manufacture a solvent mixture, and mixing the solvent mixture with an aerogel to manufacture an aerogel composition, wherein the binder includes a first binder including an aqueous polymer binder and a second binder including a fluorocarbon-based binder.

In mixing the solvent with the functional material to manufacture the solvent mixture, the solvent may be mixed with the first binder and the second binder as the functional material or may be mixed with the first binder, the second binder, and the dispersant. A detailed description of the solvent, the binder, and the dispersant may be similar to or the same as described above.

In mixing the solvent with the functional material to manufacture the solvent mixture, a flame retardant including a phosphate-based ammonium salt may be further added. A detailed description of the flame retardant may be similar to or the same as described above.

In mixing the solvent mixture with the aerogel to manufacture the aerogel composition, the aerogel may be added in powder form, and a detailed description of the aerogel may be similar to or the same as described above.

Each of mixing the solvent with the functional material including the binder, the dispersant, or the combination thereof to manufacture the solvent mixture, and mixing the solvent mixture with the aerogel to manufacture the aerogel composition, may be performed using a mixer. For example, the mixer may include, without being limited to, a planetary mixer and a Thinky^{™} mixer.

As an example, the planetary mixer may be used to mix the solvent mixture with the aerogel. The use of the planetary mixer to mix the solvent mixture with the aerogel may allow the aerogel to be substantially uniformly dispersed in the solvent.

The planetary mixer may be a device that may be used to mix or stir different substances in order to produce a homogeneous mixture. The planetary mixer may include a blade capable of performing planetary motion.

In an example embodiment, the planetary mixer may include at least one of one or more planetary blades and one or more high-speed dispersing blades. As an example, the planetary mixer may include at least one planetary blade and at least one high-speed dispersing blade.

Each of the planetary blade and the high-speed dispersing blade may continuously rotate about an axis thereof. The rotation speed may be expressed in rotations per minute (rpm) .

In an example embodiment, the planetary mixer may include a first blade and a second blade having different axes of rotation. For example, the first blade may be a low speed blade, and the second blade may be a high-speed blade. The low speed and the high speed refer to relative rotational speeds between the first blade and the second blade. As an example, the first blade may be an open blade, and the second blade may be a Despa^{™} blade.

The rotational speed of the first blade may be, for example, in a range of 10 rpm to 100 rpm, 10 rpm to 60 rpm, or 30 rpm to 70 rpm. The rotational speed of the second blade may be, for example, in a range of 100 rpm to 2000 rpm, 100 rpm to 1000 rpm, 300 rpm to 1700 rpm, or 500 rpm to 1700 rpm.

When the functional material is added to and mixed with the solvent, the rotational speed of the first blade of the mixer may be in a range of 10 rpm to 60 rpm, 20 rpm to 50 rpm, or 30 rpm to 40 rpm, and the rotational speed of the second blade may be in a range of 300 rpm to 1700 rpm, 600 rpm to 1000 rpm, or 700 rpm to 800 rpm. When the solvent and the functional material are mixed with each other, as described above, the solvent mixture in which the binder, the dispersant, or the combination thereof is substantially uniformly dispersed may be manufactured to facilitate mixing of the aerogel in a subsequent process.

When the solvent mixture and the aerogel are mixed with each other, the rotational speed of the first blade of the mixer may be in a range of 30 rpm to 70 rpm, 40 rpm to 70 rpm, or 60 rpm to 70 rpm, and the rotational speed of the second blade may be in a range of 500 rpm to 1700 rpm, 600 rpm to 1600 rpm, or 800 rpm to 1500 rpm. When the aerogel is added to and mixed with the solvent mixture, as described above, the aerogel may be hindered or prevented from clumping together to induce a substantially uniform dispersion.

A battery insulation sheet includes a first substrate, a second substrate, and an aerogel layer formed between the first substrate and the second substrate, wherein the aerogel layer is formed using the aerogel composition described above.

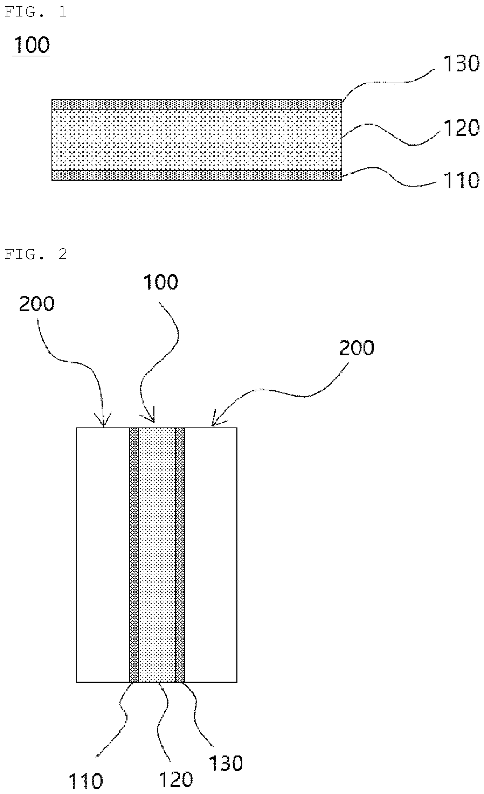

FIG. 1 is a schematic view showing the structure of a battery insulation sheet according to an example embodiment.

Referring to FIG. 1, in an embodiment, the battery insulation sheet 100 may have a structure including a first substrate 110, an aerogel layer 120 formed or located on the first substrate 110, and a second substrate 130 formed or located on the aerogel layer 120. The first substrate 110 and the second substrate 130 may face cells adjacent thereto, respectively. In this case, the first substrate 110 and the second substrate 130 may be made of or include the same material or different materials.

As an aerogel layer 120 including an aerogel composition is formed between the first substrate 110 and the second substrate 130, thermal insulation and durability of the battery insulation sheet may be improved, and the battery insulation sheet may have desired or improved heat resistance, whereby it is possible to reduce, hinder or block heat propagation between cells.

In the battery insulation sheet, a detailed description of the aerogel composition constituting the aerogel layer 120 may be similar to or the same as described above.

A variety of substrates, such as, without being limited to, a resin, a metal, an inorganic material other than the metal, or a composite thereof, may be used as each of the first substrate 110 and the second substrate 130. The form of the substrate may be, without being limited to, a film, a membrane, a sheet, etc.

The resin may include at least one of, for example, polyethylene, polypropylene, polystyrene, polyethylene terephthalate, and polyamide.

The metal may include at least one of, for example, copper, nickel, cobalt, iron, chromium, vanadium, palladium, ruthenium, rhodium, molybdenum, tungsten, iridium, silver, gold, and platinum. When a substrate made of or including the above metal is used, the substrate may be subjected to anti-corrosion treatment or insulating treatment as needed.

The inorganic material may include at least one of calcium carbonate (CaCO₃), talc, and mica.

As an example, each of the first substrate 110 and the second substrate 130 may include an inorganic material, and as another example, each of the first substrate 110 and the second substrate 130 may include mica. In this case, thermal insulation, durability, etc. of the insulation sheet may be improved.

In an example embodiment, the aerogel layer 120 may be formed so as to have a monolayer structure or a multilayer structure. When the aerogel layer 120 is formed so as to have a multilayer structure, the aerogel layer 120 may be formed so as to have 2 to 10 layers, 2 to 7 layers, or 2 to 5 layers.

A method of manufacturing a battery insulation sheet according to an example embodiment may include applying an aerogel composition to a first substrate, laminating a second substrate on the applied aerogel composition to form a laminate, pressing the laminate, and drying the laminate.

In the example method of manufacturing the battery insulation sheet, a detailed description of the first substrate 110 and the second substrate 130 may be similar to or the same as described above.

In applying the aerogel composition to the first substrate 110, the aerogel composition may be directly applied to the first substrate 110.

Applying the aerogel composition to the first substrate may be performed using a method of applying a slurry to an ordinary substrate.

Applying the aerogel composition to the first substrate 110 may be performed once or repeatedly performed twice or more.

In an example embodiment, the aerogel composition may be applied to the first substrate 110, and the second substrate 130 may be laminated to the applied aerogel composition, whereby a structure in which the first substrate 110, the aerogel layer 120, and the second substrate 130 are laminated, for example sequentially laminated, may be formed.

In an example embodiment, pressing the laminate may be performed using an ordinary pressing method.

In an example embodiment, drying the laminate may be performed at a temperature of, for example, a range of about 25 °C to 100 °C, 45 °C to 90 °C, or 60 °C to 85 °C. When drying is performed under the above temperature conditions, a solid aerogel layer may be formed or located on the substrate without a separate adhesive member or adhesive while reducing, hindering or preventing detachment between the substrate and the aerogel layer.

In an example embodiment, pressing the laminate and drying the laminate may be performed as separate processes or may be performed simultaneously or contemporaneously.

A battery module includes a plurality of cells, and the battery insulation sheet between the plurality of cells, wherein the first substrate and the second substrate face cells adjacent thereto, respectively.

FIG. 2 is a schematic view showing the battery insulation sheet according to the example embodiment of FIG. 1 formed between a plurality of cells.

Referring to FIG. 2, the battery insulation sheet 100 according to the example embodiment may be formed between a plurality of cells 200 included in a battery module. The battery insulation sheet 100 may have a structure including a first substrate 110, an aerogel layer 120 formed or located on the first substrate 110, and a second substrate 130 formed or located on the aerogel layer 120. One surface of the battery insulation sheet 100 on which the first substrate 110 is formed and the other surface of the battery insulation sheet 100 on which the second substrate 130 is formed may face cells 200 adjacent thereto, respectively. When the battery insulation sheet 100 according to the example embodiment is formed between the plurality of cells 200, it is possible to provide a battery module capable of reducing, hindering or blocking flames in one cell in advance, thereby substantially inhibiting the propagation of the flames to the other cell with a higher level of safety, and a battery pack including the same.

Hereinafter, examples will be described. However, the following examples are intended only to illustrate or describe the disclosure and should not be construed as limiting the disclosure. Contents that are not described herein may be sufficiently technically inferred by those skilled in the art, and therefore a description thereof will be omitted.

### (Manufacture of battery insulation sheet)

### Example 1

### 1. Manufacture of aerogel composition

A solvent mixture was manufactured by adding polyvinyl alcohol (Sigma Aldrich), as a first binder, and polytetrafluoroethylene, as a second binder, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel composition. A planetary mixer (DNTEK, PT-005) was used for mixing.

The solids content of the manufactured aerogel composition was found to be 50 wt% of the aerogel, 45.5 wt% of polyvinyl alcohol, and 4.5 wt% of polytetrafluoroethylene.

### 2. Manufacture of battery insulation sheet

A slurry of the manufactured aerogel composition was applied to a 0.1 mm thick mica sheet (Famica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Example 2

A battery insulation sheet was manufactured using the same method as in Example 1 except that the input of raw materials was adjusted to manufacture an aerogel composition having a solids content of 50 wt% of an aerogel, 41.7 wt% of polyvinyl alcohol, and 8.3 wt% of polytetrafluoroethylene.

### Example 3

A battery insulation sheet was manufactured using the same method as in Example 1 except that the input of raw materials was adjusted to manufacture an aerogel composition having a solids content of 50 wt% of an aerogel, 35.7 wt% of polyvinyl alcohol, and 14.3 wt% of polytetrafluoroethylene.

### Example 4

A battery insulation sheet was manufactured using the same method as in Example 1 with a difference that the input of raw materials was adjusted to manufacture an aerogel composition having a solids content of 50 wt% of an aerogel, 25 wt% of polyvinyl alcohol, and 25 wt% of polytetrafluoroethylene.

### Example 5

A battery insulation sheet was manufactured using the same method as in Example 1 with a difference that the input of raw materials was adjusted to manufacture an aerogel composition having a solids content of 50 wt% of an aerogel, 47.6 wt% of polyvinyl alcohol, and 2.4 wt% of polytetrafluoroethylene.

### Example 6

A battery insulation sheet was manufactured using the same method as in Example 1 with a difference that the input of raw materials was adjusted to manufacture an aerogel composition having a solids content of 50 wt% of an aerogel, 10 wt% of polyvinyl alcohol, and 40 wt% of polytetrafluoroethylene. In this case, dispersibility of the aerogel was reduced, whereby it was challenging to manufacture the insulation sheet.

### Example 7

A battery insulation sheet was manufactured using the same method as in Example 1 with a difference that polyurethane was added as a first binder instead of polyvinyl alcohol and polyvinylidene fluoride (PVDF) was added as a second binder instead of polytetrafluoroethylene.

### Example 8

### 1. Manufacture of aerogel composition

A solvent mixture was manufactured by adding polyvinyl alcohol (Sigma Aldrich), as a first binder, polytetrafluoroethylene, as a second binder, and a surfactant (Triton-X100, Sigma Aldrich), as a dispersant, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel composition. A planetary mixer (DNTEK, PT-005) was used for mixing.

The solids content of the manufactured aerogel composition was found to be 50 wt% of the aerogel, 45.5 wt% of polyvinyl alcohol, 4.0 wt% of polytetrafluoroethylene, and 0.5 wt% of the dispersant.

### 2. Manufacture of battery insulation sheet

A slurry of the manufactured aerogel composition was applied to a 0.1 mm thick mica sheet (Famica^{™}, Muscovite^{™}) , another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Example 9

### 1. Manufacture of aerogel composition

A solvent mixture was manufactured by adding polyvinyl alcohol (Sigma Aldrich), as a first binder, polytetrafluoroethylene, as a second binder, a surfactant (Triton-X100, Sigma Aldrich), as a dispersant, and ammonium dihydrogen phosphate (Sigma Aldrich, 7722-76-1), as a phosphorus-based material, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel composition. A planetary mixer (DNTEK, PT-005) was used for mixing.

The solids content of the manufactured aerogel composition was found to be 50 wt% of the aerogel, 45.25 wt% of polyvinyl alcohol, 4.0 wt% of polytetrafluoroethylene, 0.5 wt% of the dispersant, and 0.25 wt% of ammonium dihydrogen phosphate.

### 2. Manufacture of battery insulation sheet

A slurry of the manufactured aerogel composition was applied to a 0.1 mm thick mica sheet (Famica^{™}, Muscovite^{™}), another 0.1 mm thick mica sheet was laminated thereon in a sandwich manner, and coating was performed using a roll-rolling method. Subsequently, an aerogel layer was formed by drying at 60 °C for 24 hours to manufacture a battery insulation sheet. The total thickness of the manufactured battery insulation sheet was found to be 1.38 mm.

### Comparative Example 1

A battery insulation sheet was manufactured using the same method as in Example 1 with a difference that the input of raw materials was adjusted to manufacture an aerogel composition having a solids content of 50 wt% of an aerogel and 50 wt% of polyvinyl alcohol.

### Comparative Example 2

A battery insulation sheet was manufactured using the same method as in Example 1 with a difference that the input of raw materials was adjusted to manufacture an aerogel composition having a solids content of 50 wt% of an aerogel and 50 wt% of polytetrafluoroethylene. In this case, the insulation sheet could not be manufactured due to difficulty in dispersion.

### (Experimental Examples)

### Experimental Example 1: Evaluation of thermal insulation

Thermal insulation of each of the insulation sheets manufactured in Examples and Comparative Examples was evaluated.

Each insulation sheet was put between a pair of opposing 1 mm thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the temperature of the lower plate of the heat press in 11 minutes was measured. The results are shown in Table 1 below.

### Experimental Example 2: Evaluation of dustiness

Dustiness of each of the insulation sheets manufactured in Examples and Comparative Examples was evaluated using the following method.

Dustiness test: The weight reduction rate of each insulation sheet under vibration at 24 Hz/3mm for 6 hours was measured using a vibration tester (ASTMC592-04).

- Sample preparation: Preparation of a 12 x 12 inch (30,48 x 30,48 cm) insulation sheet
- Weight reduction rate [%] = [(Weight of insulation sheet before evaluation) - (Weight of insulation sheet after evaluation) / (Weight of insulation sheet before evaluation) x 100

**[Table 1]**

| | Example | | | | | | | | Comparati ve Example |
|---|---|---|---|---|---|---|---|---|---|
| | 1 | 2 | 3 | 4 | 5 | 7 | 8 | 9 | 1 |
| Lower plate temperatu re (°C) | 66 | 61 | 55 | 52 | 70 | 65 | 67 | 60 | 90 |
| Weight reduction rate (%) | 0.4 3 | 0.2 5 | 0.1 1 | 0.0 4 | 0. 5 | 0.5 1 | 0.3 8 | 0.3 7 | 0.4 |

Referring to Table 1 above, it can be seen from Examples 1 to 5 that thermal insulation varies depending on the content of the components in the aerogel composition, and it can be seen that thermal insulation is desirably high when the weight ratio of the first binder to the second binder is adjusted to be in a range of 1:1 to 10:1. In Examples 1 and 7, it can be seen that thermal insulation varies depending on the type of the first binder and the second binder. In Example 8, it can be seen that dustiness is improved when the binder and the dispersant are mixed. In Example 9, it can be seen that thermal insulation and dustiness are further improved when polyvinyl alcohol and the flame retardant are included.

In Comparative Example 1, it can be seen that no second binder was included, whereby thermal insulation was substantially reduced. In Comparative Example 2, no first binder was included, whereby dispersibility was reduced, and therefore no insulation sheet was manufactured.

Thus, it can be seen that, when an aerogel composition according to an example embodiment is used, thermal insulation and heat propagation reducing, hindering or blocking properties are substantially improved.

As is apparent from the above description, a battery insulation sheet according to an example embodiment may have desired thermal insulation and heat resistance. A battery module including the battery insulation sheet according to the example embodiment may reduce or inhibit propagation of heat and flames from a cell to cells adjacent thereto due to thermal runaway of the cell.

## Claims

1. An aerogel composition for battery insulation sheets (100), the aerogel composition comprising:
an aerogel;
a functional material including one of a binder, a dispersant, and a combination thereof; and
a solvent, wherein
the binder includes a first binder including an aqueous polymer binder and a second binder including a fluorocarbon-based binder.

2. The aerogel composition as claimed in claim 1, wherein the aerogel has a BET specific surface area in a range of 500 m²/g to 1,000 m²/g determined using ISO 9277:2010.

3. The aerogel composition as claimed in claim 1 or 2, wherein the aerogel is included so as to account for a range of 30 wt% to 70 wt% based on a total amount of solids in the aerogel composition.

4. The aerogel composition as claimed in in any one of the preceding claims, wherein the first binder comprises at least one of a water-based polymer, an anionic water-soluble polymer, a cationic water-soluble polymer, and a water-dispersible polymer.

5. The aerogel composition as claimed in in any one of the preceding claims, wherein the second binder comprises at least one of polytetrafluoroethylene, polyvinylidene fluoride, and a polyvinylidene fluoride-hexapropylene copolymer.

6. The aerogel composition as claimed in in any one of the preceding claims, wherein the first binder and the second binder are included in a weight ratio in a range of 0.1:1 to 20:1.

7. The aerogel composition as claimed in in any one of the preceding claims, wherein the dispersant comprises at least one of a surfactant and a phosphate-based salt.

8. The aerogel composition as claimed in in any one of the preceding claims, wherein the functional material is included so as to account for a range of 30 wt% to 70 wt% based on a total amount of solids in the aerogel composition.

9. The aerogel composition as claimed in in any one of the preceding claims, wherein a weight ratio of the solvent to a total amount of solids in the aerogel composition is in a range of 1:1 to 1:90.

10. The aerogel composition as claimed in in any one of the preceding claims, further comprising a flame retardant that includes a phosphorus-based material.

11. The aerogel composition as claimed in claim 10, wherein the phosphorus-based material comprises at least one of a phosphate-based ammonium salt, red phosphorus, and compounds represented by Chemical Formula 1 and Chemical Formula 2 below: 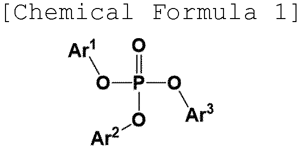 in Chemical Formula 1 above, Ar¹ to Ar³ are each independently substituted or unsubstituted C6 to C20 aryl groups, and 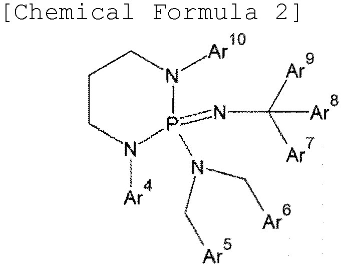 in Chemical Formula 2 above, Ar⁴ to Ar¹⁰ are each independently substituted or unsubstituted C6 to C20 aryl groups.

12. The aerogel composition as claimed in in any one of the preceding claims, wherein the aerogel is included so as to account for a range of 40 wt% to 60 wt%, the first binder is included so as to account for a range of 10 wt% to 50 wt%, and the second binder is included so as to account for a range of 1 wt% to 45 wt%, based on a total amount of solids in the aerogel composition.

13. A method of manufacturing an aerogel composition for battery insulation sheets (100), the method comprising:
mixing a solvent with a functional material including one of a binder, a dispersant, and a combination thereof to manufacture a solvent mixture; and
mixing the solvent mixture with an aerogel to manufacture an aerogel composition, wherein
the binder includes a first binder including an aqueous polymer binder and a second binder including a fluorocarbon-based binder.

14. A battery insulation sheet (100) comprising:
a first substrate (110);
a second substrate (130); and
an aerogel layer (120) between the first substrate (110) and the second substrate (130), wherein
the aerogel layer (120) is formed using the aerogel composition as claimed in claim 1.

15. A battery module comprising:
a plurality of cells (200); and
the battery insulation sheet (100) as claimed in claim 14 between the plurality of cells (200), wherein
the first substrate (110) and the second substrate (130) are facing cells (200) adjacent thereto, respectively.
